# EUROPEAN PATENT SPECIFICATION

(11) **EP 3 006 371 B1**
(45) Date of publication and mention of the grant of the patent: **08.11.2017**
(21) Application number: 15191262.3
(22) Date of filing: 21.08.2009
(51) Int. Cl.: B65D 81/32

(54) **DISPENSER APPARATUS FOR CURABLE LIQUID MATERIAL**
AUSGABEVORRICHTUNG FÜR HÄRTBARES FLÜSSIGES MATERIAL
APPAREIL DE DISTRIBUTION DE MATÉRIAU LIQUIDE DURCISSABLE

(43) Date of publication of application: 13.04.2016
(62) Divisional of application: 09168430.8
(73) Proprietor: CMP Products Limited, Northumberland NE23 1WH (GB)
(72) Inventor: PROUD, Samuel Liam, Newcastle upon Tyne, Tyne and Wear NE5 4DF (GB)
(74) Representative: Vinsome, Rex Martin

(56) References cited:
- EP-A- 1 958 608
- WO-A-2007/073526
- DE-A1- 2 649 772
- DE-U1-202005 000 854
- DE-U1-202005 004 135
- US-A1- 2007 119 862
- US-B1- 6 286 670

## Description

The present invention relates to a dispenser apparatus for dispensing curable liquid material, and relates particularly, but not exclusively, to such a dispenser apparatus for filling cable glands for use in hazardous areas.

Many cable glands for use in connecting a cable to an enclosure in hazardous areas need to be filled with a compound which provides a barrier against the effects of an explosion occurring within the enclosure to which the cable gland is attached. The barrier is typically formed from a two-part clay-filled epoxy compound. The two component parts of the compound need to be thoroughly mixed with each other prior to fitting into the gland, and the resulting putty like material needs to be packed between the individual conductors in the cable. Such an arrangement is disclosed in GB 2258350.

This known arrangement suffers from a number of drawbacks. Firstly, the cure time of the putty like material is chosen to be relatively long, in order to enable it to be manipulated into the spaces between the individual conductors before curing becomes advanced. As a result, the filled cable assembly must be left undisturbed for a significant period, usually several hours, especially if mixed at low temperatures. Also, the components of the filler material sometimes contain hazardous materials which become harmless when the filler material is mixed. Persons mixing the components of the putty like filler material may come into contact with these hazardous materials during mixing, and air can become trapped within the cable gland by the filler material which may cause the barrier formed by the filler material to fail in the event of an explosion. Filling of the cable gland is also relatively difficult, especially in the case of small cable glands.

DE 202005000854U discloses an assembly according to the preamble of claim 1.

Preferred embodiments of the present invention seek to overcome one or more of the above disadvantages of the prior art.

According to an aspect of the present invention, there is provided a filler assembly as defined in claim 1.

By providing elongate dispenser means to dispense mixed curable liquid material and second barrier means for temporarily preventing passage of the curable liquid material to said dispenser means, this provides the advantage that the first and second components of the curable liquid material can be mixed in a sealed container comprising the first and second compartments, thus enabling the user to avoid coming into contact with harmful components of the curable liquid material. As a result of the provision of elongate dispenser means, dispensing of the curable liquid can be more carefully controlled, as a result of which less viscous and faster curing liquid material can be used than in the prior art. This therefore provides the advantage of enabling more rapid formation of a filled cable gland incorporating the material. In addition, with the present invention, the curable material can be dispensed into the assembled gland, i.e. the cable gland can be filled with the conductors of the cable in a connected state, as a result of which the electrical integrity of the joint can be ensured, whereas the putty like compound of the known arrangement must be moulded around the conductors of the cable with the gland disassembled, as a result of which the cable cores can not be electrically connected.

The body may be flexible.

This provides the advantage of making the apparatus easier and less expensive to manufacture.

The first and/or second barrier means may comprise at least one releasable clamp.

The apparatus may further comprise a first component of a curable liquid material in at least one said first chamber, and a second component of said curable liquid material in at least one said second chamber.

The curable liquid material may be adapted to change colour as a result of curing thereof.

This provides the advantage of providing a visual indicator to the user when the cable gland filling process is complete.

The curable liquid material may include polyurethane.

According to another aspect of the present invention, there is provided a method as defined in claim 12.

The cover member may be adapted to prevent curable liquid material from penetrating an end face of the cable gland.

A preferred embodiment of the invention will now be described, by way of example only and not in any limitative sense, with reference to the accompanying drawings in which:-
Figure 1 is a perspective view of a dispensing apparatus embodying the present invention;
Figure 2 is a partially cut away perspective view of a cable gland having a filler formed using the apparatus of Figure 1; and
Figure 3 is a cross sectional view of the filled cable gland of Figure 2 with a thread protector in place.

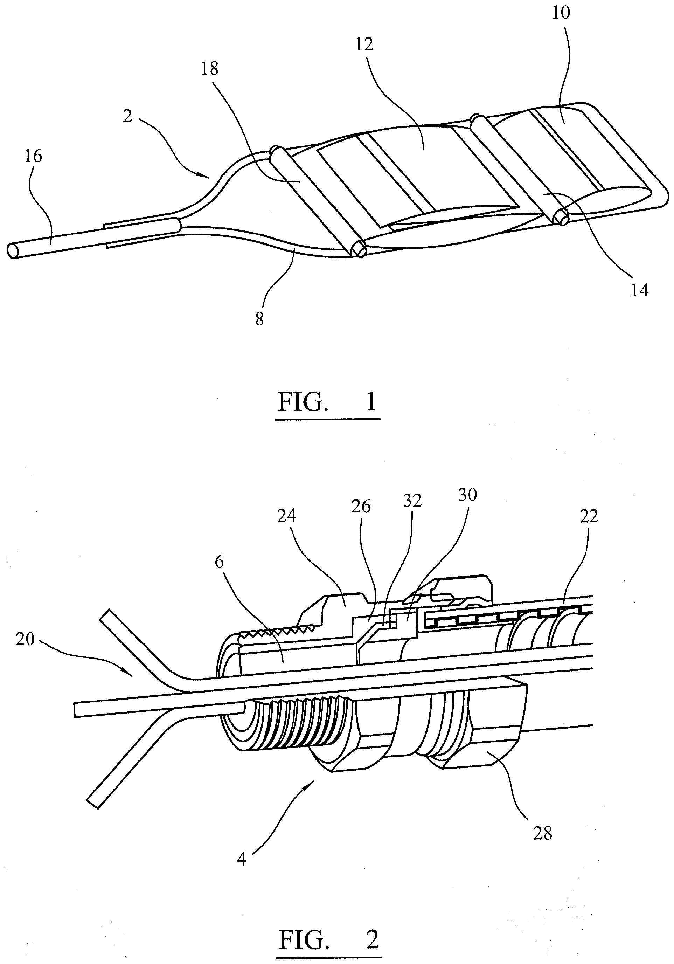

Referring to Figure 1, a dispenser apparatus 2 embodying the present invention and for use in filling a cable gland 4 (Figure 2) with curable liquid material 6 comprises a body of suitable transparent flexible plastics material defining a flexible bag 8 having a first compartment 10 for accommodating a first component of a polyurethane-based liquid curable material 6, and a second compartment 12 for accommodating a second component of the material 6. A first clamp 14 temporarily separates the first compartment 10 and second compartment 12 to thereby prevent mixing of the first and second components of the material 6. The first and second components are coloured differently (for example blue and yellow) so that thorough mixing of the first and second components produces a green liquid, thereby providing a visual indication when thorough mixing of the first and second components has occurred. Mixing of the first and second components together causes gelling of the material and initiates curing of the curable liquid material 6.

The dispenser apparatus 2 is also provided with an elongate hollow nozzle 16 extending from the second compartment 12 such that dispensing of the mixed curable liquid material can be carefully controlled. In particular, the nozzle 16 can be inserted a considerable distance into the cable gland 4 and between individual conductors 20 of the core of a cable 22 attached to the cable gland 4 (Figure 2) so that the liquid material 6 can be highly flowable and fast-curing, as a result of which the cable gland 4 can be rapidly filled and air entrapment by the liquid material 6 minimised. A second clamp 18 temporarily prevents material flowing from the second compartment 12 into the nozzle 16, so that dispensing of the material 6 can be prevented until thorough mixing together of the first and second components has occurred.

The flexible bag 8 is formed from two sheets of material welded together along all but one of their edges to form a bag having an open mouth, which is then mounted to the nozzle 16. The second clamp 18 is then mounted to the bag adjacent to the nozzle 16, and the second component of the material 6 is dispensed into the second compartment 12. The first clamp 14 is then mounted to the bag to seal the second component in the second compartment 12, and the fist component is then dispensed into the first compartment 10. The open edge of the bag is then sealed to seal the first component in the first compartment 10.

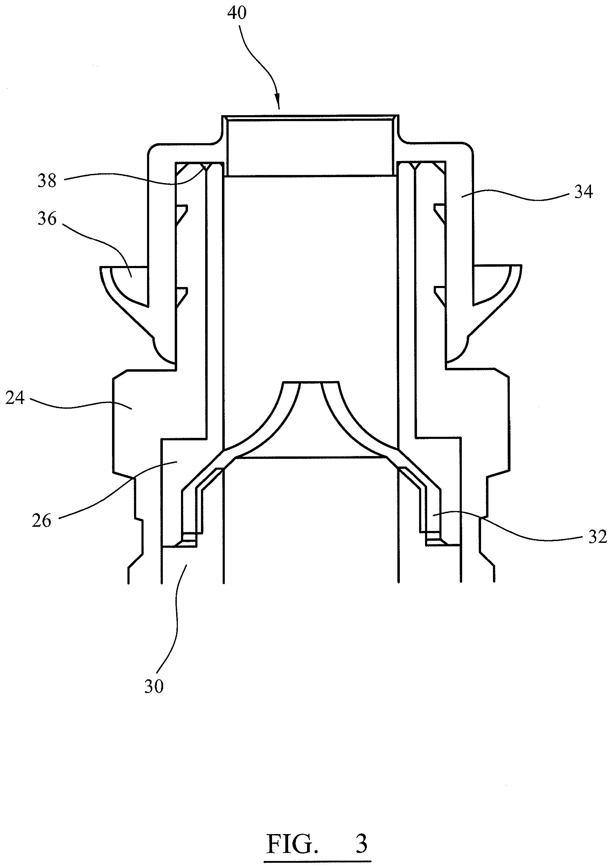

Referring to Figures 2 and 3, the cable gland 4 to be filled by means of the dispenser apparatus 2 of Figure 1 comprises a threaded outer connector 24 for threaded connection to an enclosure (not shown) and a compound tube 26 rotatably mounted within the outer connector 24. A cable connector 28 is mounted to the end of the cable 22 and is connected to the outer connector 24 by means of cooperating screw threads (not shown).

A ring 30 abuts the cable connector 28 and a flexible seal 32 is located around the inner conductors 20 of the cable 22 and compressed between the compound tube 26 and ring 30 for limiting the extent of penetration of resin material 6 into the cable gland 4 before curing of the resin material 6. The flexible seal 32 comprises a generally frusto-conical body of elastomeric material having an aperture (not shown) therethrough for engaging the central conductors 20 of the cable 22. The aperture in the seal 32 is sized such that it stretches to pass around the conductors 20 to tightly engage the conductors 20 to form a reasonably effective barrier to passage of the material 6 along the space defined between the conductors 20 and the compound tube 26.

Referring to Figure 3, a thread protector 34 formed of elastomeric material such as rubber is located over the external screw thread of the outer connector 24 of the cable gland 4 prior to filling of the cable gland with resin material 6. The thread protector 34 has a hollow rim 36 for catching excess resin material 6 which may flow out of end 40 of the cable gland 4 during the filling procedure, and an inner circular rim 38 which prevents penetration of resin material 6 into the gap between the outer connector 24 and the compound tube 26. This ensures that the compound tube 24 complete with cable connectors 20 can be removed from the outer connector 24 after curing of the resin material 6.

The process of filling the cable gland 4 of Figures 2 and 3 by means of the dispenser apparatus 2 of Figure 1 will now be described.

In order to fill the core of the cable gland 4 with resin material, the flexible seal 32 initially placed over the core conductors 20 of the cable 22 so that the seal 32 tightly grips the conductors 20. The outer connector 24 with compound tube 26 are then mounted to the ring 30 and cable connector 28 to compress the seal 32 between the ring 30 and compound tube 26. As a result, the flexible seal 32 acts as a barrier to penetration of the liquid resin 6 material into the interior of the cable gland 4.

The first clamp 14 is then removed from the dispenser apparatus 2 and the second clamp 18 left in place, to enable thorough mixing of the first and second components of the liquid resin material 6. The first and second components are coloured blue and yellow respectively, a result of which the liquid resin material 6 is bright green when it is thoroughly mixed. The second clamp 18 is then removed, and the liquid resin 6 material dispensed through the nozzle 16 into the space between the conductors 20 of the cable 22 and into the space around the conductors 20 inside the compound tube 26 of the cable gland 4, where its movement along the axis of the cable gland 4 is restricted by the flexible seal 32. The seal 32 provides a sufficient barrier to penetration of the resin material 6 to hold back the resin material until it begins to gel and support itself. At the same time, the thread protector 34 protects the external thread of the outer connector 24 from excess resin material and prevents penetration of the liquid resin material between the outer connector 24 and the compound tube 26. The resin material 6 is arranged to change colour to dark green when it is cured, so that a visual indication is provided when the curing process is completed.

It will be appreciated by persons skilled in the art that the above embodiment has been described by way of example only, and not in any limitative sense, and that various alterations and modifications are possible without departure from the scope of the invention as defined by the appended claims.

## Claims

1. A filler assembly for filling a cable gland, having a plurality of cores of at least one cable extending therethrough, with curable liquid material, the assembly comprising:
(a) a dispenser apparatus (2) for a curable liquid material, the apparatus comprising:-
a body (8) adapted to define at least one first chamber (10) for accommodating a first component of a curable liquid material, and at least one second chamber (12) for accommodating a second component of said curable liquid material, wherein mixing of said first and second components initiates curing of said curable liquid material; **characterised in that** the dispenser apparatus further comprises
elongate dispenser means (16) adapted to dispense mixed curable liquid material therefrom between a plurality of cores of at least one cable; and
the assembly further comprises
(b) at least one barrier member (32) for restricting the extent of penetration of said curable liquid material along said cores, wherein at least one said barrier member comprises a respective flexible member having at least one aperture therethrough for engaging at least one core of at least one cable.

2. An assembly according to claim 1, wherein said body is flexible.

3. An assembly according to any one of the preceding claims, further comprising a first component of a curable liquid material in at least one said first chamber, and a second component of said curable liquid material in at least one said second chamber.

4. An assembly according to claim 3, wherein the curable liquid material is adapted to change colour as a result of curing thereof.

5. An assembly according to any one of the preceding claims, further comprising a cover member (34) for covering an external screw thread of a cable gland to prevent said curable liquid material coming into contact with said screw thread.

6. An assembly according to claim 5, wherein the cover member is adapted to prevent curable liquid material from penetrating an end face (40) of the cable gland.

7. An assembly according to any one of the preceding claims, wherein at least one said barrier member has a respective tapering portion.

8. An assembly according to claim 1, wherein at least one said second chamber is adapted to communicate with at least one said first chamber to enable mixing of said first and second components to initiate curing of said curable liquid material.

9. An assembly according to claim 1, wherein the dispenser apparatus further comprises first barrier means (14) for temporarily preventing mixing of said first and second components.

10. An assembly according to claim 1, wherein the elongate dispenser means is adapted to communicate with at least one said second chamber and the dispenser apparatus further comprises second barrier means (18) for temporarily preventing passage of said curable liquid material from the or each said second chamber to said dispenser means.

11. An assembly according to claim 9 or 10, wherein the first and/or second barrier means comprises at least one releasable clamp.

12. A method of filling a cable gland with curable liquid material by means of an assembly according to any one of the preceding claims, the method comprising:
locating at least one said barrier member around at least one said core of at least one said cable in the cable gland; and
locating an outlet of said dispenser means in said cable gland and dispensing curable liquid material therefrom so as to expel air from the cable gland.

## Patentansprüche

1. Eine Füllanordnung zum Befüllen einer Kabelverschraubung, umfassend eine Vielzahl von Adern mindestens eines hindurchlaufenden Kabels, mit härtbarem flüssigem Material, wobei die Anordnung umfasst:
(a) eine Ausgabevorrichtung (2) für ein härtbares flüssiges Material, wobei die Vorrichtung umfasst:
einen Körper (8) eingerichtet um mindestens eine erste Kammer (10) zur Aufnahme einer ersten Komponente eines härtbaren flüssigen Materials und mindestens eine zweite Kammer (12) zur Aufnahme einer zweiten Komponente des härtbaren flüssigen Materials zu bilden, wobei mischen besagter erster und zweiter Komponenten härten des härtbaren flüssigen Materials auslöst; **dadurch gekennzeichnet, dass** die Ausgabevorrichtung ferner
ein längliches Ausgabemittel (16), eingerichtet um davon gemischtes härtbares flüssiges Material zwischen eine Vielzahl von Adern mindestens eines Kabels auszugeben, umfasst; und die Anordnung ferner
(b) mindestens ein Absperrelement (32) zur Begrenzung des Ausmaßes des Eindringens des härtbaren flüssigen Materials entlang der Adern umfasst, wobei mindestens ein besagtes Absperrelement ein jeweiliges flexibles Element, umfassend mindestens eine hindurchgehende Öffnung zum Einlegen mindestens einer Ader mindestens eines Kabels, umfasst.

2. Eine Anordnung nach Anspruch 1, wobei besagter Körper flexibel ist.

3. Eine Anordnung nach einem der vorhergehenden Ansprüche, ferner umfassend eine erste Komponente eines härtbaren flüssigen Materials in mindestens einer besagten ersten Kammer und eine zweite Komponente von besagtem härtbarem flüssigem Material in mindestens einer besagten zweiten Kammer.

4. Eine Anordnung nach Anspruch 3, wobei das härtbare flüssige Material eingerichtet ist die Farbe als Ergebnis des Härtens davon zu ändern.

5. Eine Anordnung nach einem der vorhergehenden Ansprüche, ferner umfassend ein Abdeckelement (34) zum Abdecken eines externen Schraubengewindes einer Kabelverschraubung zum Verhindern, dass besagtes härtbares flüssiges Material mit dem Schraubengewinde in Kontakt kommt.

6. Eine Anordnung nach Anspruch 5, wobei das Abdeckelement eingerichtet ist härtbares flüssiges Material am Eindringen in eine Stirnfläche (40) der Kabelverschraubung zu hindern.

7. Eine Anordnung nach einem der vorhergehenden Ansprüche, wobei mindestens ein besagtes Absperrelement ein jeweiliges Verjüngungsstück aufweist.

8. Eine Anordnung nach Anspruch 1, wobei mindestens eine besagte zweite Kammer eingerichtet ist mit mindestens einer besagten ersten Kammer zu kommunizieren um mischen besagter erster und zweiter Komponenten zum Auslösen des Härtens des besagten härtbaren flüssigen Materials zu ermöglichen.

9. Eine Anordnung nach Anspruch 1, wobei die Ausgabevorrichtung ferner ein erstes Absperrelement (14) zur temporären Verhinderung des Mischens besagter erster und zweiter Komponenten aufweist.

10. Eine Anordnung nach Anspruch 1, wobei das längliche Ausgabemittel eingerichtet ist mit mindestens einer besagten zweiten Kammer zu kommunizieren und die Ausgabevorrichtung ferner ein zweites Absperrelement (18) zur temporären Verhinderung des Durchfließens von besagtem härtbarem flüssigem Material von der oder jeder besagten zweiten Kammer zu besagtem Ausgabemittel umfasst.

11. Eine Anordnung nach Anspruch 9 oder 10, wobei das erste und/oder zweite Absperrelement mindestens eine lösbare Klammer aufweist.

12. Ein Verfahren zum Befüllen einer Kabelverschraubung mit härtbarem flüssigem Material mittels einer Anordnung nach einem der vorhergehenden Ansprüche, wobei das Verfahren umfasst:
Anordnen mindestens eines besagten Absperrelements um mindestens eine besagte Ader mindestens eines besagten Kabels herum in der Kabelverschraubung; und
Anordnen eines Auslasses von besagtem Ausgabemittel in besagter Kabelverschraubung und Ausgeben härtbaren flüssigen Materials daraus, um Luft aus der Kabelverschraubung zu verdrängen.

## Revendications

1. Ensemble de remplissage pour remplir un presse-étoupe, ayant une pluralité d'âmes d'au moins un câble s'étendant à travers celui-ci, avec un matériau liquide durcissable, l'ensemble comprenant :
(a) un appareil de distribution (2) pour un matériau liquide durcissable, l'appareil comprenant :
un corps (8) adapté pour définir au moins une première chambre (10) pour recevoir un premier composant d'un matériau liquide durcissable, et au moins une deuxième chambre (12) pour recevoir un deuxième composant dudit matériau liquide durcissable, où le mélange desdits premier et deuxième composants déclenche le durcissement dudit matériau liquide durcissable ;
**caractérisé en ce que** l'appareil de distribution comprend en outre
un moyen de distribution allongé (16) adapté pour distribuer un matériau liquide durcissable mélangé à partir de celui-ci entre une pluralité d'âmes d'au moins un câble ; et
l'ensemble comprend en outre
(b) au moins un élément de barrière (32) pour limiter le degré de pénétration dudit matériau liquide durcissable le long desdites âmes, où au moins ledit élément de barrière comprend un élément flexible respectif ayant au moins une ouverture traversante pour s'engager avec l'au moins une âme d'au moins un câble.

2. Ensemble selon la revendication 1, dans lequel ledit corps est flexible.

3. Ensemble selon l'une quelconque des revendications précédentes, comprenant en outre un premier composant d'un matériau liquide durcissable dans au moins ladite première chambre, et un deuxième composant dudit matériau liquide durcissable dans au moins ladite deuxième chambre.

4. Ensemble selon la revendication 3, dans lequel le matériau liquide durcissable est adapté pour changer de couleur suite à son durcissement.

5. Ensemble selon l'une quelconque des revendications précédentes, comprenant en outre un élément de couvercle (34) pour couvrir un filetage de vis externe d'un presse-étoupe pour empêcher ledit matériau liquide durcissable d'entrer en contact avec ledit filetage de vis.

6. Ensemble selon la revendication 5, dans lequel l'élément de couvercle est adapté pour empêcher le matériau liquide durcissable de pénétrer par une face d'extrémité (40) du presse-étoupe.

7. Ensemble selon l'une quelconque des revendications précédentes, dans lequel au moins ledit élément de barrière a une partie conique respective.

8. Ensemble selon la revendication 1, dans lequel au moins ladite deuxième chambre est adaptée pour communiquer avec au moins ladite première chambre pour permettre le mélange desdits premier et deuxième composants pour déclencher le durcissement dudit matériau liquide durcissable.

9. Ensemble selon la revendication 1, dans lequel l'appareil de distribution comprend en outre un premier moyen de barrière (14) pour empêcher temporairement le mélange desdits premier et deuxième composants.

10. Ensemble selon la revendication 1, dans lequel le moyen de distribution allongé est adapté pour communiquer avec au moins ladite deuxième chambre et l'appareil de distribution comprend en outre un deuxième moyen de barrière (18) pour empêcher temporairement le passage dudit matériau liquide durcissable depuis la deuxième chambre ou chacune desdites deuxièmes chambres vers ledit moyen de distribution.

11. Ensemble selon la revendication 9 ou 10, dans lequel le premier et/ou le deuxième moyen(s) de barrière comprend/comprennent au moins une bride de fixation libérable.

12. Procédé de remplissage d'un presse-étoupe avec un matériau liquide durcissable au moyen d'un ensemble selon l'une quelconque des revendications précédentes, le procédé comprenant le fait :
de localiser au moins ledit élément de barrière autour d'au moins ladite âme d'au moins ledit câble dans le presse-étoupe ; et
de localiser une sortie dudit moyen de distribution dans ledit presse-étoupe et de distribuer un matériau liquide durcissable à partir de celui-ci de manière à expulser l'air du presse-étoupe.
